# EUROPEAN PATENT SPECIFICATION

(11) **EP 2 708 869 B1**
(45) Date of publication and mention of the grant of the patent: **30.07.2014**
(21) Application number: 13178247.6
(22) Date of filing: 26.07.2013
(51) Int. Cl.: G01N 1/22, G01N 35/10, G01M 3/32

(54) **Sampler for verifying gas tightness of a test tube seal**
Probennehmer zur Dichtheitsprüfung eines Septums
Échantillonneur pour vérifier l'étanchéité d'un septum

(30) Priority: 14.09.2012 IT BS20120140; 10.12.2012 IT BS20120177
(43) Date of publication of application: 19.03.2014
(73) Proprietor: HTA S.R.L., 25131 Brescia (IT)
(72) Inventor: Marchini, Giovanni, 25122 Brescia (IT)
(74) Representative: Trentin, Michele

(56) References cited:
- GB-A- 1 272 826
- US-A- 4 811 252
- US-A- 5 672 155
- US-A- 5 932 482
- US-A- 5 948 360
- US-A1- 2002 006 360
- US-A1- 2012 103 068

## Description

### Field of application

The present invention is generally applied to the technical sector of devices used for chemical analysis and, in particular, it deals with a sampler for chemical analyzers.

### Background of the invention

The most common typology of chemical analyzers makes use of the static headspace analytical technique. This technique is used to determine the concentration of volatile organic substances in samples to be analyzed by means of gas-cromatographers or other analytical instruments.

In particular, this technique consists of analyzing the gaseous phase of the sample in a situation of thermodynamic equilibrium with the other phase, typically the liquid one. Thus, the preparation phase of the sample consists of bringing about the mentioned phases and taking them to a state of equilibrium inside a closed container.

More in detail, the sample to be analyzed is put into containers, typically glass containers, with adequate capacity (generally 10 or 20 ml), which are hermetically sealed by means of a membrane (for example silicone-PTFE). These containers are thus inserted into an oven in which they are heated up to a predetermined temperature which is then kept constant for a timespan enough for the analyzed substance to reach the equilibrium between two phases, typically the liquid and the gaseous ones. At a later stage, a pretermined quantity of gaseous phase is taken from the container by making a hole in the membrane by means of a needle and, finally, the said quantity is injected into the analyzer which, as already said, typically consists of a gas-chromatographer.

It is self-evident that the results of the tests are directly linked to the quantity of gaseous phase which is sampled and analyzed. In this sense, it is of primary importance to guarantee the precision and accurateness of the sampled quantity. Thus, it is absolutely necessary both for the container lock to be actually tight and for the sampling function to be exempt from uncontrolled leaks. Also the transferring system of the gaseous phase into the gas-chromatographer is extremely important and, besides this, it is also important for it to be carried out in an accurate, precise way and without leaks.

The sampling process of the gaseous phase from the containers hermetically sealed and the process of injection of the said gaseous phase into the analyzer can be completely automated through the use of samplers for headspace.

They can be classified into different categories on the basis of the trasferring system of the gaseous phase into the analysis instrument.

First of all, systems based on gas-tight syringes are known. When the equilibrium is reached, a rate of headspace is sampled from the container by means of the gas-tight syringe, that is itself heated up, and injected into the analyzer. These systems, which are, from an operative point of view, very simple, have the disadvantage that they are not provided with mechanisms for checking the integrity of the transferring system of the quantity of gaseous phase (headspace) and the tightness of the container from which the sampling is operated. In fact, they could be subject to losses or to sample contamination caused by defects not only of the container, but also of the syringe. Besides this, the plunger movement of the syringe could be defective and non-linear, that is a damaged plunger, and this leads to invalidation of the analysis carried out because of a wrong sampled quantity.

Systems for pressure balancing are known too. When the equilibrium is reached, one needle is inserted into the sample container and by means of carrier gas the container is put at a predetermined pressure level. When the equilibrium is reached, a 4-gate and 2-way valve, to which the needle is connected, is commuted for a predetermined timespan so that, by means of a heated transferring line, the gaseous phase can flow into the analyzer.

Pressurization and loop systems are known too, whose functioning is similar to that of systems for pressure balancing. Pressurization and loop systems make use of one 6-gate and 2-way valve equipped with loop. The headspace is firstly trapped in the loop and then injected into the analyzer. With respect to the pressure balancing systems, this system allows a better control of the injected sample quantity.

The latter two systems are, from an operative point of view, more complex and, so, more expensive than syringe systems. However, they are provided with pressure measurers and regulators which, besides having their basic functionalities, allow to verify the integrity of the system (lack of gaseous leaks in the line) and of the sample container (container correctly sealed). These functionalities have now become a peculiarity of these systems.

Regarding the systems based on gas-tight syringes they, too, can have pressure regulators to regulate the flow of the cleaning gas or, in case, of the pressurizing gas, but they do not allow the verification of the system integrity and of the sample container; on the other hand, this is allowed in the balancing pressure systems or in the pressurization and loop systems.

Examples of such prior art samplers are disclosed in the patent applications US 2002/006360 A1 or in US2012/0103068 A1. In US 5672155 A1 a programmable, hand-held fluid transfer apparatus is disclosed that measures and limits the plunger motor drive current to avoid damage to the apparatus. Furthermore, GB 1272826 A teaches to utilize the electrical power consumption of a vacuum pump to indicate the leakage-tightness of a container.

### Summary of the invention

Object of the present invention is to at least partially overcome the drawbacks mentioned above by a method for verifying the integrity of a container of samples prepared by a sampler.

Another object of the present invention is to provides a method to verify the integrity also of the sampler.

In the context of the general object mentioned above, one particular object of the present invention is to provide an automatic sampler, that is one auto-sampler, with gas-tight syringes that allows to carry out, automatically, tests of the integrity of the sampler itself, with particular reference to the functioning and to the syringe tightness, in order to avoid leakage and to guarantee that the quantity of gaseous phase sampled is precise.

Obviously another particular object of the present invention is to provide an automatic sampler with gas-tight syringes which allows to carry out automatically tests on the integrity of the sampler itself also when the sampler typology corresponds to samplers designed for preparing samples which are not in the gaseous phase and which do not use the headspace technique. In this sense, the present invention shall not be considered limited as concerns the application scope.

Another particular object of the present invention is to provide an automatic sampler with gas-tight syringes allowing to verify automatically the integrity of the sample container in order to avoid leaks and sample contamination.

A further particular object is to provide a sampler for gas-tight syringes allowing to carry out tests even by keeping execution costs lower than costs for pressure-balancing systems or pressurization and loop systems.

These objects, like others that will be clarified followingly, are fulfilled by the methods and by an automatic sampler for chemical analyzers in accordance with the following claims, which are an integral part of this description.

In particular, the sampler comprises at least one gas-tight syringe with plunger to sample from one or more containers predetermined amounts of substances to perform chemical analysis. These substances can be both in gaseous phase and in liquid phase and this does not constitute a limit for the present invention.

The same sampler comprises at least one first movement unit operatively connected to the plunger to move it in order to perform said sampling.

According to an aspect of the invention, the sampler comprises also measuring means of the electrical voltage and the electrical current supplied to the first movement unit during the movement of the plunger. In this way, the necessary energy to perform said movement is calculated.

As it is known, the movement of the syringe plunger, when inserted into a container for sampling, requires enough energy to overcome the frictions of the plunger, the frictions of the components of the first movement unit and the pressure inside the container. The latter can be a positive factor if the plunger is inserted into the syringe (the internal pressure opposes this handling), or, in the opposite case, it can be a negative factor, if the plunger is extracted from the syringe (the internal pressure easiness the movement). Since the values of the frictions of the syringe plunger and the values of the first movement unit are known, it is advantageously calculated the necessary energy to deal with the internal pressure of the container. As a consequence, if the container is not tight any more, because it has been damaged or because it has not been sealed correctly, the previous cited measurement allows to detect the problem and to scrap the defective container. In this case, in fact, not only does the sample not correspond to the predetermined quantity to carry out the chemical analysis, but it could also be contaminated or diluted from external agents.

To calculate the requested energy and to make comparisons with predetermined values, the sampler of the invention comprises at least one logical control unit operatively connected at least to the measuring means.

Another advantage is that the sampler of the invention allows to check its own integrity. If, in fact, the measurements previously described are carried out with closed needle, the difference between energy values calculated for the extraction and the insertion of the plunger will have to correspond to what is necessary to overcome the normal frictions of the components of the first movement unit and of the plunger movement into the syringe. In case of anomalous calculations of energy values, the advantage is that there will be indication of damage on the first movement unit or on the syringe. In any case, this means that either the sampler or the syringe are damaged and maintenance operations or replacement of the syringe will have to be carried out.

From what has been said, it is self-evident that the objects of the invention are fulfilled also by a method testing the integrity of a sample container and through a method testing the integrity of a sampler.

In particular, in both cases, as it will be better explained later in the text, the method comprises a measuring step of the energy necessary to insert and/or to extract the plunger in respect to the syringe.

The difference between the two methods is related to the fact that, in the first case, the needle of the syringe is pre-emptively inserted into the container to be verified, while in the second case the method foresees that the needle of the syringe is closed.

### Brief description of the drawings

Further features and advantages of the invention will appear more evident upon reading the detailed description of some preferred, non-exclusive embodiments of a sampler for chemical analyzers according to the invention, which are described as non-limiting examples with the help of the annexed drawings, in which:
FIG. 1 represents a sampler for chemical analyzers according to the invention in axonometric view ;
FIGG. from 2 to 4 represent details of the sampler of FIG. 1;
FIGG. 5 and 6 represent operative steps of the sampler of FIG. 1.

### Detailed description of some preferred realisation examples

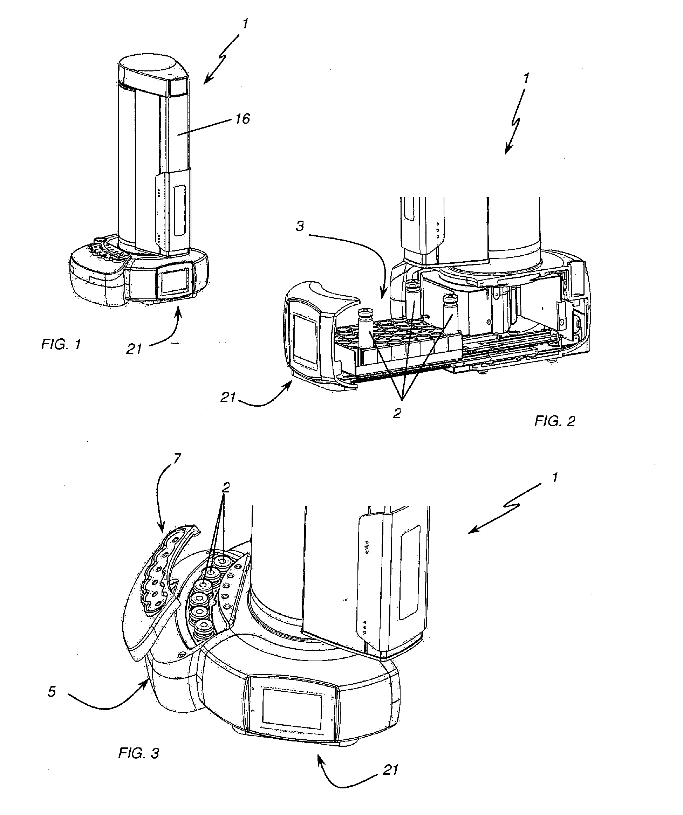

With reference to the cited figures, and in particular to the figg. 1 and 2, an automatic sampler **1** for chemical analyzers is described. The methods of the invention, in fact, are particularly effective if they are applied to an automatic sampler **1** like that it is going to be described. However, it is self-evident the methods are not be considered limited to such a typology of sampler.

As it can be observed, that described in the figures is a cylindrical sampler, that is an automatic sampler or auto-sampler. However, this shall not be considered limiting for different execution forms in which the automatic sampler is, for example, of carthesian type. Besides this, the same sampler can also include the chemical analyzer for which the samples to be analyzed are prepared.

In any case, it comprises a plurality of containers **2** which contain substances to perform chemical analysis. These are generally contained on trays **3**. Obviously, both the number and the disposition of containers are not characteristics to be considered limiting for the present invention.

As previously said, among the chemical analyzers the typology acting according to the analytical technique of the static headspace is particularly common. The preparation of the sample for these analyzers consists in cause the gaseous phase inside a closed container that contains an element to be analyzer in its solid or liquid phase and then in leading these two phases to the equilibrium.

In order to do this, the sampler **1** of the invention comprises, as it can be observed in fig. 3, an oven **5** to heat up the containers **2** for a definite timeframe. This oven **5** can be shaken in order to accelerate the passage of the analytes from the liquid/solid phase to the gaseous phase. The same oven **5** has also a cover **7** with the function of maintaining a homogenous temperature inside it.

In order to transport the containers **2** inside the oven **5,** the sampler **1** is typically provided with an holding group not represented in the figures. It catches the container **2** with the sample and deposits it into the oven **5** and, viceversa, it takes it back to its original position. It is self-evident that there is no preference for the type of holding group, for example automatic clamps, and this is not a limiting factor for the present invention.

As previously said, the fact that the sampler described **1** is used for the headspace technique is not limiting for the present invention. In fact, also different samplers using anyway gas-tight syringes as, for example, samplers for the preparation of samples in their liquid phase are to be considered within the patent scope of the present invention.

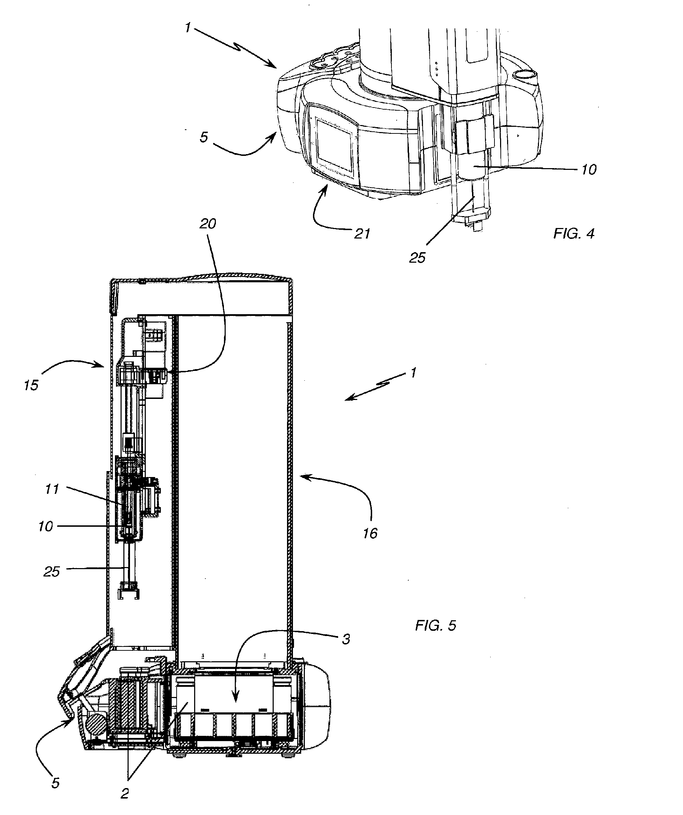

According to an aspect of the invention, the sampler **1** comprises, as it is observed in the figures 3 and 4, a gas-tight syringe **10** with plunger **11** for sampling predetermined quantities from the gaseous phase contained in the headspace of the containers **2** aptly conditioned in the oven **5.**

In order to avoid for the analytes present in the gaseous phase to condense again, the syringe **10** is aptly heated up by suitable heating means not represented in the figures and which can be, for example, radiators.

With the syringe **10,** as previously said, predetermined quantities of gaseous phases from the headspace of the containers **2** are sampled. In this sense, the sampler **1** comprises a first movement unit **15** of the plunger **11.** This first movement unit **15,** as a consequence, allows to automate the sampling of a predetermined quantity of gaseous phase from the container **2** and inserts it into the chemical analyzer.

In this sense, the sampler **1** is also aptly provided with a second movement unit **16** of the syringe **10.** Obviously the presence of this second movement unit shall not be considered a limiting factor for those realization forms in which it is not present. In fact, the presence of this second movement unit **16** is bound to the type of sampler **1** (cylindrical one) which was chosen to be represented in the figures, but which, as already said, is not a limiting factor for different realization forms of the invention.

Also the number of syringes **10** shall not be considered a limitation. In other terms, different executive forms with more syringes operating at the same time can be produced.

The second movement unit **16** is typically composed by an housing for the syringe **10** and by an engine, but also this aspect shall not be considered a binding factor for different realization forms. The only fundamental aspect, as already said, is the starting-up of the plunger **11** of the syringe **10** by the first movement unit **15.**

In order to guarantee the validity of the chemical analysis to be carried out, the quantity of the substance sampled must be particularly precise. In this sense, it is fundamental for the plunger movement **11** to be precise, and for the plunger **11,** syringe **10** and containers **2** to be tight. All this allows, at the same time, the sample not to be contaminated by external agents. In order to avoid the invalidation of the analysis, the sampler **1** of the invention comprises all what is necessary to verify the mentioned conditions.

In particular, the sampler **1** has the advantage of comprising measuring means **20** for the electrical voltage and the electrical current of the first movement unit **15** in order to measure, by means of these two parameters, the energy spent for the movement of the plunger **11.** This value has the advantage of allowing, as it will be later described, to check if the previous conditions are all met.

According to another aspect of the invention, the sampler **1** comprises a logical control unit **21** operatively connected to the measuring means **20** to calculate the energy used and to make comparisons. In the realization form described, the said logical control unit **21** is integrated into the body of the sampler **1,** however, this shall not be considered a binding aspect for different realization forms in which, for example, the logical control unit is external to the sampler and connected to it via wire or via wireless communication circuits. For example, the logic control unit can be composed by one remote personal computer provided with a suitable management software.

Operatively, according to the invention methods, the sampler **1** allows, to operator's choice, to verify the integrity of the containers **2** for samples or the integrity of the system with reference to the first movement unit **15** and to the coupling of the plunger **11** to the syringe **10.**

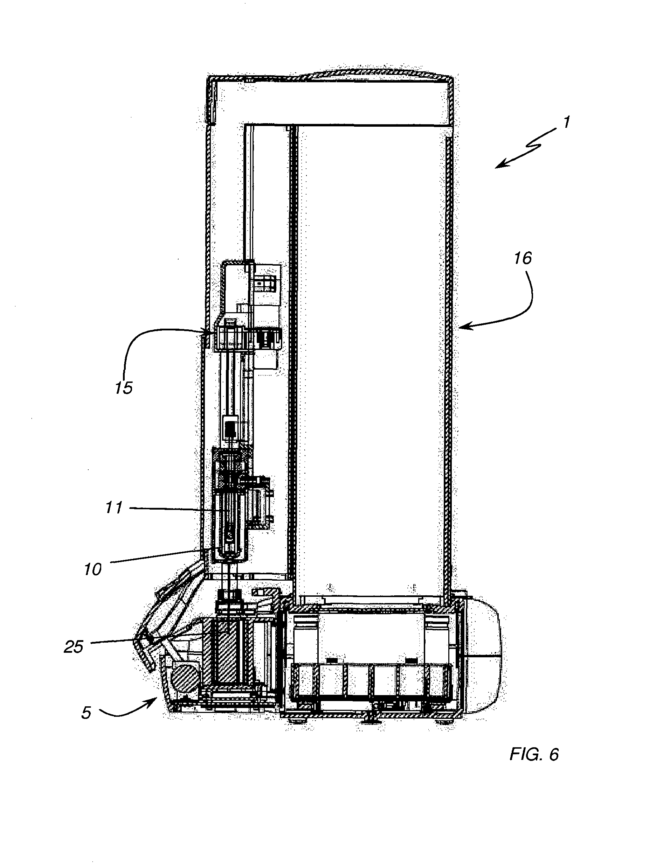

In case of verifying the integrity of containers **2,** the sampler **1** moves the syringe **10** by means of the second movement unit **16** controlled by the logical control unit **21** so that the needle **25** is positioned, as represented in figure 6, inside the container **2** keeping the substance to be analyzed. The insertion happens at a predetermined depth that can be modified in order to adapt it to the type of container **2** and to the substance, in such a way the needle **25** is anyway positioned in correspondence to the headspace or at the desired level.

At a next step, it is operated a first handling to extract the plunger **11** from the syringe **10** up to a first predetermined position which corresponds, for example but not necessarily, to 90% of the nominal volume of the syringe **10.**

Then it is operated a second insertion handling of the plunger **11** into the syringe **10** up to a second predetermined position which corresponds, for example but not necessarily, to 10% of the nominal volume of the syringe **10.**

This second handling is controlled by the measuring means **20,** the feeding electrical voltage and the electrical power supply of the first movement unit **15.** This data are sent to the logical control unit **21** which calculates the energy spent for the realization of the second handling and the obtained value is compared with predetermined reference values in order to establish if they are in conformity with the internal pressure of the container **2.**

As already said, the energy necessary to move the plunger **11** inside the syringe **10** is the sum of the following values: value of the frictions (between plunger **11** and syringe **10,** between plunger and gaseous phase of the substance to be analyzed, between the transmission bodies of the kinematic chain of the first movement unit **15),** value of the inertia and value of the pressure operated by the gaseous phase of the sample on the plunger **11.**

The latter value can have positive or negative values depending on the direction of the plunger **11** handling, that is insertion into the syringe **10** or extraction out of it. In fact, during the extraction handling the energy caused by the pressure will ease the plunger handling **11,** while the handling will be contrasted during the insertion handling.

Taking the frictions and inertia as almost always constant, at determined temperatures and at a predetermined speed, the energy required for the first movement unit **15** is a function of the pressure inside the container **2.** By carrying out tests, in the same conditions, on a defined group of sample containers it is then possible to make a comparison and to indicate the reliability of the tightness of the container **2** keeping inside the substance to be analyzed . As alternative it is possible to carry out a test on a sample container in defined conditions (and whose tightness is considered as reliable) and to use the measured values as a reference for the evaluation of the containers **2** subject to analysis.

Obviously the fact that the evaluation is made by comparing predetermined values or by making a comparison with a standard reference container shall not be considered a limiting characteristic. In any case, it is self-evident that the test can be carried out several times for the same container **2** in order to increase the testing precision.

It is also known that the internal pressure of the container **2** may be such so as not to allow to determine the integrity of the container. This happens, for example, when the temperature, to which the container **2** is subject, increases not excessively. In this sense, according to an aspect of the invention it is expected, before the step of insertion of the needle **25** into the container **2,** a previous extraction of the plunger **11** from the syringe **10** up to a predetermined position. Besides this, after the insertion phase of the needle **25** into the container **2** and before the first extraction handling of the plunger **11,** there is one insertion post-handling of the same plunger **11** up to a starting predetermined position. In this way, the pressure internal to the container **2** is increased and this guarantees, as a consequence, the integrity check.

Obviously, the fact of starting from other positions shall not be considered a limiting aspect and, similarly, neither the amounts of predetermined positions mentioned above are a limiting aspect.

According to another aspect of the invention, one second insertion handling of the plunger **11** into the syringe **10** is operated, up to one second predetermined position which corresponds, for example but not necessarily, to 10% of the nominal volume of the syringe.

This second handling is checked by measuring the energy necessary for its operation and it is compared not only with the reference values stored in the memory, but also with the energy value of the first handling in order to make a more precise test, since it has the advantage of depends form the pressure of the gaseous phase in the container **2** both as a positive and as a negative value. In other words, the difference between the first test and this second test allows to eliminate the values of the system frictions and to obtain, as a consequence, data depending only to the internal pressure of the container **2.**

In case of selection of the integrity check of the sampler **1**, the test substantially corresponds to the one previously described, but with the difference that it is typically carried with the needle **25** of the syringe **10** closed.

In particular, it is possible to proceed by applying two different methods, even though they are similar. One first method consists in closing the needle **25** and carrying out one first extraction handling of the plunger **11** up to one first predetermined position. This causes a change in the internal pressure of the syringe **10** that can be predetermined and that will have affect the energy necessary for this handling. The value of this energy is measured.

Then, there is one second insertion handling of the plunger **11** with measurement of the energy required. Comparing these energy values between them and with predetermined reference values allows to determine if the syringe **10** is tight.

The needle **25** can be closed in different ways. For example, it is possible to push the needle **25** against another rubber element (for example a fitting).

The mentioned test is substantially based on the test of the value of the depression in the syringe **10** obtained by extracting the plunger **11.**

It is also possible to proceed with the second method, which is based, on the other hand, on generating an overpressure inside the syringe **10.**

In this case, a first extraction handling of the plunger **11** is operated up to one first predetermined position with the needle **25** open and then with the needle **25** closed.

Successively, a second insertion handling of the plunger **11** is operated measuring the energy required for such handling.

Then, one third extraction handling of the plunger **11** is operated measuring the energy required for such handling.

The comparison of measured energy values with predetermined reference values and the comparison of measured energy values among them provide information about the integrity of the syringe **10.**

By carrying out some tests at known temperature and by acquiring the energy values required by the first movement unit **15**, it is then possible to store these data within the internal logical control unit **21** of the sampler **1** and to use them as reference to verify if the plunger **11** of the syringe **10**, the syringe **10** itself or one component of the first movement unit **15** are not tight. In fact, through this test, the energy is a function only of the mechanical friction. Energy values higher those stored in the logical control unit **21** of the sampler **1** can indicate, for example, a faulty scrolling of the plunger **11** inside the syringe **10** that can negatively affect the sampling and, as a consequence, the analysis; on the other hand, energy values inferior to those stored can indicate a faulty tightness of the plunger **11** of the syringe **10** with similar negative consequences for the analysis operation.

On the light of the foregoing, it is understood that the methods mentioned above and the automatic sampler implementing these methods overcome the drawbacks of the prior art, since they allow to carry out automatically tests on the integrity of the sampler itself with particular reference to the functioning and to the tightness of the syringe so as to avoid leaks and to ensure the precision of the quantity of gaseous phase sampled.

In particular, losses and samples contamination are avoided, and all this is reached by keeping executive costs lower than those for known systems, such as pressure-balancing systems and pressurization and loop systems.

The methods of the invention, like the sampler implementing them, are susceptible of a number of changes and variants, within the inventive principle disclosed in the appended claims. All the details may be replaced by other technically equivalent elements, and the materials may be different depending on different needs.

While the methods of the invention, like the sampler implementing them, have been described with particular reference to the accompanying figures, the numerals referred to in the disclosure and claims are only used for the sake of a better intelligibility of the invention and shall not be intended to limit the claimed object in any manner.

## Claims

1. A method for verifying the integrity of a container (**2**) for samples, sampled by a sampler (**1**) comprising at least one gas-tight syringe (**10**) provided with a needle (**25**) and a plunger (**11**) to sample from said container (**2**) predetermined amounts of substances to perform chemical analysis, said method comprising the following steps:
- inserting the needle (**25**) of said syringe (**10**) in said container (**2**) up to a predetermined insertion depth;
- first extracting handling of said plunger (**11**) from said syringe (**10**) up to a first predetermined position;
- measurement of the energy value necessary for the execution of said first extracting handling;
- comparison of said energy value with predetermined reference values to check whether the internal pressure in said container (**2**) corresponds to predetermined values.

2. Method as claimed in claim 1, comprising:
- before said insertion of said needle (2**5**) in said container (**2**) a previous extracting handling of said plunger (**11**) from said syringe (**10**) up to a previous predetermined position;
- after said insertion step of said needle (**25**) in said container (**2**) and before said first extracting handling of said plunger (**11**) from said syringe (**10**), a post-insertion handling of said plunger (**11**) in said syringe (**10**) up to a predetermined starting position.

3. Method as claimed in claim 1 or 2, comprising, after said measuring step of the energy value necessary for said first handling, the following further steps:
- second inserting handling of said plunger (**11**) in said syringe (**10**) up to a second predetermined position;
- measurement of the energy value necessary for said second inserting handling;
- comparison of said energy value with predetermined values and with said energy values necessary for the execution of said first insertion handling to check if the internal pressure in said container (**2**) corresponds to predetermined values.

4. A method for verifying the integrity of a sampler (**1**) comprising at least one gas-tight syringe (**10**) provided with a needle (**25**) and a plunger (**11**) to sample from a container (**2**) predetermined amounts of substances to perform chemical analysis, said method comprising the following steps:
- first extracting handling of said plunger (**11**) from said syringe (**10**) up to a first predetermined position with the needle (**25**) of said syringe (**10**) in air;
- stopping up said needle (**25**);
- second inserting handling of said plunger (**11**) in said syringe (**10**) up to a second predetermined position;
- measurement of the energy value necessary for said second handling;
- third extracting handling of said plunger (**11**) from said syringe (**10**) up to a third predetermined position;
- measurement of the energy value necessary for said third handling;
- comparison of said energy values necessary for said second and third handling, and
- comparison of said energy values with predetermined reference values to check the integrity of said syringe (**10**).

5. A method for verifying the integrity of a sampler (**1**) comprising at least one gas-tight syringe (**10**) provided with a needle (**25**) and a plunger (**11**) to sample from a container (**2**) predetermined amounts of substances to perform chemical analysis, said method comprising the following steps:
- stopping up said needle (**25**);
- first extracting handling of said plunger (**11**) from said syringe (**10**) up to a first predetermined position;
- measurement of the energy value necessary for said first handling;
- second inserting handling of said plunger (**11**) in said syringe (**10**) up to a second predetermined position;
- measurement of the energy value necessary for said second handling;
- comparison of said energy values necessary for said first and second handling, and
- comparison of said energy values with predetermined reference values to check the integrity of said syringe (10).

6. An automatic sampler for chemical analyzers comprising:
- at least one gas-tight syringe (**10**) provided with a plunger (**11**) to sample from one or more containers **(2)** predetermined amounts of substances to perform chemical analysis;
- at least one first movement unit (**15**) operatively connected at least to said plunger (**11**) to move it in order to perform said sampling;
**characterised in that** the sampler comprises
- measuring means (**20**) of the electric voltage and the electric current supplied to said first movement unit (**15**) during the movement of said plunger (**11**);
- at least one logical control unit (**21**) for verifying the integrity of the automatic sampler or the container, the logical control unit operatively connected at least to said measuring means (**20**) and adapted to calculate the energy used for said movement of said plunger (**11**) and compare said energy value with predetermined Reference values.

7. Sampler as claimed in claim 6, comprising at least one second movement unit (**16**) of said at least one syringe (**10**).

8. Sampler as claimed in claim 6 or 7, comprising at least one oven (**5**) for heating said containers (**2**).

9. Sampler as claimed in one or more of the claims from 6 to 8, comprising heating means of said syringe (**10**).

## Patentansprüche

1. Verfahren zum Prüfen der Integrität eines Gefäßes (2) für Proben, die mit einem Probenehmer (1) entnommen werden, der wenigstens eine gasdichte Spritze (10) umfasst, die mit einer Nadel (25) und einem Kolben (11) versehen ist, um aus dem Gefäß (2) vorausbestimmte Mengen an Stoffproben zur Durchführung chemischer Analysen zu entnehmen, wobei das Verfahren folgende Schritte umfasst:
- Einführen der Nadel (25) der Spritze (10) in das Gefäß (2) bis zu einer vorausbestimmten Einführtiefe;
- erste Ausziehbewegung des Kolbens (11) aus der Spritze (10) bis zu einer ersten vorausbestimmten Position;
- Messen des Energiewertes, der zum Ausführen der ersten Ausziehbewegung notwendig ist;
- Vergleichen des Energiewertes mit vorausbestimmten Referenzwerten, um zu prüfen, ob der Innendruck im Gefäß (2) vorausbestimmten Werten entspricht.

2. Verfahren nach Anspruch 1, umfassend:
- vor dem Einführen der Nadel (25) in das Gefäß (2) eine vorhergehende Ausziehbewegung des Kolbens (11) aus der Spritze (10) bis zu einer vorhergehenden vorausbestimmten Position;
- nach dem Einführschritt der Nadel (25) in das Gefäß (2) und vor der ersten Ausziehbewegung des Kolbens (11) aus der Spritze (10) eine Nacheinführbewegung des Kolbens (11) in die Spritze (10) bis zu einer vorausbestimmten Ausgangsposition.

3. Verfahren nach Anspruch 1 oder 2, umfassend die folgenden weiteren Schritte nach dem Messschritt des Energiewertes, der für die erste Bewegung notwendig ist:
- zweite Einführbewegung des Kolbens (11) in die Spritze (10) bis zu einer zweiten vorausbestimmten Position;
- Messen des Energiewertes, der für die zweite Einführbewegung notwendig ist;
- Vergleichen des Energiewertes mit vorausbestimmten Werten und mit den Energiewerten, die zum Ausführen der ersten Einführbewegung notwendig sind, um zu prüfen, ob der Innendruck im Gefäß (2) vorausbestimmten Werten entspricht.

4. Verfahren zum Prüfen der Integrität eines Probenehmers (1), der wenigstens eine gasdichte Spritze (10) umfasst, die mit einer Nadel (25) und einem Kolben (11) versehen ist, um aus dem Gefäß (2) vorausbestimmte Mengen an Stoffproben zur Durchführung chemischer Analysen zu entnehmen, wobei das Verfahren folgende Schritte umfasst:
- erste Ausziehbewegung des Kolbens (11) aus der Spritze (10) bis zu einer ersten vorausbestimmten Position, mit der Nadel (25) der Spritze (10) in der Luft;
- Zustopfen der Nadel (25);
- zweite Einführbewegung des Kolbens (11) in die Spritze (10) bis zu einer zweiten vorausbestimmten Position;
- Messen des Energiewertes, der für die zweite Bewegung notwendig ist;
- dritte Ausziehbewegung des Kolbens (11) aus der Spritze (10) bis zu einer dritten vorausbestimmten Position;
- Messen des Energiewertes, der für die dritte Bewegung notwendig ist;
- Vergleichen der Energiewerte, die für die zweite und dritte Bewegung notwendig sind, und
- Vergleichen der Energiewerte mit vorausbestimmten Referenzwerten, um die Integrität der Spritze (10) zu prüfen.

5. Verfahren zum Prüfen der Integrität eines Probenehmers (1), der wenigstens eine gasdichte Spritze (10) umfasst, die mit einer Nadel (25) und einem Kolben (11) versehen ist, um aus dem Gefäß (2) vorausbestimmte Mengen an Stoffproben zur Durchführung chemischer Analysen zu entnehmen, wobei das Verfahren folgende Schritte umfasst:
- Zustopfen der Nadel (25);
- erste Ausziehbewegung des Kolbens (11) aus der Spritze (10) bis zu einer ersten vorausbestimmten Position;
- Messen des Energiewertes, der für die erste Bewegung notwendig ist;
- zweite Einführbewegung des Kolbens (11) in die Spritze (10) bis zu einer zweiten vorausbestimmten Position;
- Messen des Energiewertes, der für die zweite Bewegung notwendig ist;
- Vergleichen der Energiewerte, die für die erste und zweite Bewegung notwendig sind, und
- Vergleichen der Energiewerte mit vorausbestimmten Referenzwerten, um die Integrität der Spritze (10) zu prüfen.

6. Automatischer Probenehmer für chemische Messgeräte, umfassend:
- wenigstens eine gasdichte Spritze (10), die mit einem Kolben (11) versehen ist, um aus einem oder mehreren Gefäßen (2) vorausbestimmte Mengen an Stoffproben zur Durchführung chemischer Analysen zu entnehmen;
- wenigstens eine erste Bewegungseinheit (15), die wenigstens mit dem Kolben (11) wirkungsmäßig verbunden ist, um ihn zur Durchführung der Probenahme zu bewegen;
**dadurch gekennzeichnet, dass** der Probenehmer Folgendes umfasst:
- Mittel zum Messen (20) der Stromspannung und der Stromstärke, mit der die erste Bewegungseinheit (15) beim Bewegen des Kolbens (11) versorgt wird;
- wenigstens eine logische Steuerungseinheit (21) zum Prüfen der Integrität des automatischen Probenehmers oder des Gefäßes, wobei die logische Steuerungseinheit wenigstens mit den Mitteln zum Messen (20) wirkungsmäßig verbunden und angepasst ist, um die Energie zu berechnen, die für die Bewegung des Kolbens (11) verbraucht wird, und um den Energiewert mit vorausbestimmten Referenzwerten zu vergleichen.

7. Probenehmer nach Anspruch 6, umfassend wenigstens eine zweite Bewegungseinheit (16) der wenigstens einen Spritze (10).

8. Probenehmer nach Anspruch 6 oder 7, umfassend wenigstens einen Ofen (5) zum Erhitzen der Gefäße (2).

9. Probenehmer nach einem oder mehreren der Ansprüche 6 bis 8, umfassend Heizmittel der Spritze (10).

## Revendications

1. Procédé pour vérifier l'intégrité d'un récipient (2) pour échantillons, échantillonnés à l'aide d'un échantillonneur (1) comprenant au moins une seringue étanche aux gaz (10) dotée d'une aiguille (25) et d'un piston (11), pour échantillonner, à partir dudit récipient (2), des quantités prédéterminées de substances pour effectuer une analyse chimique, ledit procédé comprenant les étapes suivantes :
- l'insertion de l'aiguille (25) de ladite seringue (10) dans ledit récipient (2) jusqu'à une profondeur d'insertion prédéterminée ;
- une première manipulation d'extraction dudit piston (11) de ladite seringue (10) jusqu'à une première position prédéterminée ;
- la mesure de la valeur d'énergie nécessaire pour l'exécution de ladite première manipulation d'extraction ;
- la comparaison de ladite valeur d'énergie avec des valeurs de référence prédéterminées, pour vérifier si la pression interne dans ledit récipient (2) correspond aux valeurs prédéterminées.

2. Procédé selon la revendication 1, comprenant :
- avant ladite insertion de ladite aiguille (25) dans ledit récipient (2), une manipulation d'extraction préalable dudit piston (11) de ladite seringue (10) jusqu'à une position prédéterminée préalable ;
- après ladite étape d'insertion de ladite aiguille (25) dans ledit récipient (2) et avant ladite première manipulation d'extraction dudit piston (11) de ladite seringue (10), une manipulation post-insertion dudit piston (11) dans ladite seringue (10) jusqu'à une position de départ prédéterminée.

3. Procédé selon la revendication 1 ou 2, comprenant, après ladite étape de mesure de la valeur d'énergie nécessaire pour ladite première manipulation, les étapes supplémentaires suivantes :
- une deuxième manipulation d'insertion dudit piston (11) dans ladite seringue (10) jusqu'à une seconde position prédéterminée ;
- la mesure de la valeur d'énergie nécessaire pour ladite deuxième manipulation d'insertion ;
- la comparaison de ladite valeur d'énergie avec des valeurs prédéterminées et avec lesdites valeurs d'énergie nécessaires pour l'exécution de ladite première manipulation d'insertion pour vérifier si la pression interne dans ledit récipient (2) correspond aux valeurs prédéterminées.

4. Procédé de vérification de l'intégrité d'un échantillonneur (1) comprenant au moins une seringue étanche aux gaz (10) dotée d'une aiguille (25) et d'un piston (11) pour échantillonner, à partir d'un récipient (2), des quantités prédéterminées de substances pour effectuer l'analyse chimique, ledit procédé comprenant les étapes suivantes :
- une première manipulation d'extraction dudit piston (11) de ladite seringue (10) jusqu'à une première position prédéterminée avec l'aiguille (25) de ladite seringue (10) dans l'air ;
- l'arrêt de ladite aiguille (25) ;
- une deuxième manipulation d'insertion dudit piston (11) dans ladite seringue (10) jusqu'à une deuxième position prédéterminée ;
- la mesure de la valeur d'énergie nécessaire pour ladite deuxième manipulation ;
- une troisième manipulation d'extraction dudit piston (11) de ladite seringue (10) jusqu'à une troisième position prédéterminée ;
- la mesure de la valeur d'énergie nécessaire pour ladite troisième manipulation ;
- la comparaison desdites valeurs d'énergie nécessaires pour lesdites deuxième et troisième manipulations, et
- la comparaison desdites valeurs d'énergie avec les valeurs de référence prédéterminées pour vérifier l'intégrité de ladite seringue (10).

5. Procédé pour vérifier l'intégrité d'un échantillonneur (1) comprenant au moins une seringue étanche aux gaz (10) dotée d'une aiguille (25) et d'un piston (11) pour échantillonner, à partir d'un récipient (2), des quantités prédéterminées de substances pour effectuer l'analyse chimique, ledit procédé comprenant les étapes suivantes :
- l'arrêt de ladite aiguille (25) ;
- une première manipulation d'extraction dudit piston (11) de ladite seringue (10) jusqu'à une première position prédéterminée ;
- la mesure de la valeur d'énergie nécessaire pour ladite première manipulation ;
- une deuxième manipulation d'insertion dudit piston (11) dans ladite seringue (10) jusqu'à une deuxième position prédéterminée ;
- la mesure de la valeur d'énergie nécessaire pour ladite deuxième manipulation ;
- la comparaison desdites valeurs d'énergie nécessaires pour lesdites première et deuxième manipulations, et
- la comparaison desdites valeurs d'énergie avec les valeurs de référence prédéterminées pour vérifier l'intégrité de ladite seringue (10).

6. Echantillonneur automatique pour analyseurs chimiques, comprenant :
- au moins une seringue étanche aux gaz (10) dotée d'un piston (11) pour échantillonner à partir d'un ou plusieurs récipients (2), des quantités prédéterminées de substances pour effectuer une analyse chimique ;
- au moins une première unité de déplacement (15) reliée opérationnellement au moins audit piston (11) pour le déplacer, afin d'effectuer ledit échantillonnage ;
**caractérisé en ce que** l'échantillonneur comprend :
- des moyens de mesure (20) de la tension électrique et du courant électrique fournis à ladite première unité de déplacement (15) au cours du déplacement dudit piston (11) ;
- au moins une unité de contrôle logique (21) pour vérifier l'intégrité de l'échantillonneur automatique ou du récipient, l'unité de contrôle logique étant connectée opérationnellement au moins auxdits moyens de mesure (20) et conçue pour calculer l'énergie utilisée pour ledit déplacement dudit piston (11) et comparer ladite valeur d'énergie avec les valeurs de référence prédéterminées.

7. Echantillonneur selon la revendication 6, comprenant au moins une seconde unité de déplacement (16) de ladite au moins une seringue (10).

8. Echantillonneur selon la revendication 6 ou 7, comprenant au moins un four (5) pour chauffer lesdits récipients (2).

9. Echantillonneur selon une ou plusieurs des revendications 6 à 8, comprenant des moyens de chauffage de ladite seringue (10).
